# EUROPEAN PATENT APPLICATION

(11) **EP 3 441 670 A1**
(43) Date of publication of application: **13.02.2019**
(21) Application number: 17020347.5
(22) Date of filing: 09.08.2017
(51) Int. Cl.: F23L 7/00, F23L 15/00, F23C 6/04, F23D 14/08, F23D 14/32, F23D 14/58, F23D 14/66

(54) **METHOD AND BURNER ASSEMBLY FOR COMBUSTING A FUEL GAS WITH AN OXIDANT**

(71) Applicant: Linde Aktiengesellschaft, 80331 München (DE)
(72) Inventor: Ekman, Tomas, 13937 Saltsjö-Boo (SE); Mieth, Rainer, 85435 Erding (DE); Richardson, Andrew Peter, Clinton, NJ 08809 (US); Hultstein, Eric, 81927 München (DE)
(74) Representative: Gellner, Bernd

(57) **Abstract**

The invention relates to a method for combusting a fuel gas with an oxidant by using a burner assembly (10) comprising a burner (12) and a lance (14), the method comprising providing via the burner (12) a main gas flow to a combustion, wherein the main gas flow comprises a main part of the fuel gas and a first part of the oxidant. Further, the method comprises providing via the lance (14) a staging gas flow to the combustion, wherein the staging gas flow comprises a second part of the oxidant and an auxiliary part of the fuel gas. The main part of the fuel gas is larger than the auxiliary part of the fuel gas. Furthermore, the invention relates to a burner assembly (10) and a furnace comprising such.

## Description

### Technical Field

The invention relates to a method and an apparatus for combusting a fuel gas with an oxidant, as well as to a furnace comprising such a burner assembly. Particularly, the invention relates to methods and burner assemblies to be used in combination with a furnace for melting meltable materials, for instance for melting or producing glass.

### Prior Art

For heating furnaces for melting glass, often burner assemblies are used to provide the required heat inside the furnace. To achieve an optimized heating inside the furnace and of the materials to be molten or burned therein, the combustion is preferably optimized with respect to its spatial dimensions and/or temperature and/or luminosity.

In particular, for melting glass, in many cases a flat flame is advantageous, which has an optimized radiative heat transfer between the flame and the material or glass to be molten. Furthermore, often a broad or flat flame is desired to maximize the radiative emission of the combustion. In this respect, a flat flame burner is often characterized by the combustion and/or flame having a larger extension in its width, i.e. lateral or horizontal, than vertical, whereby the contact area between the combustion and/or flame with the material to be molten is increased.

For an efficient combustion, fuel gas and also an oxidant is required. While the fuel gas is typically provided via a burner, the oxidant is often provided in several stages, wherein one part of the oxidant is provided together with the fuel gas via the burner causing at least a partial precombustion of the fuel gas in the burner, while another part of the oxidant is typically provided via a lance outside the burner, which is typically referred to as staging. A precombustion in the burner may also allow controlling the velocities of the inner fuel gas flow and the outer oxidant flow ejected by the burner.

Typically, the preheating or precombustion in the burner serves the purpose to generate molecular chains within the fuel gas having longer lengths, which may increase the radiative emission during the combustion. Furthermore, the preheating can result in a larger number of soot particles within the fuel gas, which also may increase the radiative emission.

The staging, i.e. providing at least a part of the oxidant externally, such as via a lance outside of the burner, may be advantageous for controlling the temperature within the burner, particularly for reducing the peak temperature of the combustion for reducing the generation and emission of nitrogen oxides (NOₓ) generated within the flame during the combustion.

For instance, US 9,568,194 B2 discloses a burner assembly for separately injecting fuel gas and oxidant into a combustion zone.

However, the burner assemblies and methods know in the prior art often suffer from the disadvantage that a penetration depth of the flame or combustion zone into the furnace is very limited.

Therefore, it is the technical problem of the present invention to provide a method and a burner assembly for combusting a fuel gas with an oxidant, wherein a combustion zone and/or a flame have a longer penetration depth or length and are suitable to penetrate deeper into a furnace.

This object is achieved by a method and an apparatus having the features of the respective independent claims. Preferred embodiments are subject-matters of the dependent claims and the following description.

### Disclosure of the Invention

In one aspect, the invention relates to a method for combusting a fuel gas with an oxidant by using a burner assembly comprising a burner and a lance, the method comprising providing via the burner a main gas flow to a combustion, wherein the main gas flow comprises a main part of the fuel gas and a first part of the oxidant. Further, the method comprises providing via the lance a staging gas flow to the combustion, wherein the staging gas flow comprises a second part of the oxidant and an auxiliary part of the fuel gas. The main part of the fuel gas is larger than the auxiliary part of the fuel gas.

In another aspect, the invention relates to a burner assembly for combusting a fuel gas with an oxidant, the burner assembly comprising a burner for providing a main gas flow to a combustion, wherein the main gas flow comprises a main part of the fuel gas and a first part of the oxidant. In addition, the burner assembly comprises a lance for providing a staging gas flow to the combustion, wherein the staging gas flow comprises a second part of the oxidant and an auxiliary part of the fuel gas; and an injection element for injecting the auxiliary part of the fuel gas to the second part of the oxidant before providing the staging gas flow to the combustion via the lance. The main part of the fuel gas is larger than the auxiliary part of the fuel gas.

In another aspect, the invention relates to a furnace comprising a burner assembly according to the invention.

The fuel gas may comprise any combustible fluid, which may be liquid but is preferably gaseous, and which is suitable for being combusted by a burner assembly. Particularly, the fuel gas may comprise natural gas or may essentially consist of natural gas and/or methane. "Essentially consisting" of natural gas means that impurities and/or contaminations may be present, wherein the fuel gas is still considered as essentially consisting of a natural gas.

The oxidant may be any oxidizing fluid, which may be liquid but is preferably gaseous, and which is suitable for being used in a combustion of a fuel gas by a burner assembly. Preferably, the oxidant comprises Oxygen or essentially consists of Oxygen. "Essentially consisting" of Oxygen means that impurities and/or contaminations may be present, wherein the oxidant is still considered as essentially consisting of Oxygen.

The invention provides the advantage that also within the staging gas flow a precombustion can be achieved by precombusting the auxiliary part of the fuel gas with the second part of the oxidant before providing the staging gas flow to the combustion. By this, the volume of the staging gas flow can be increased, since the gas resulting from the precombustion in the staging gas flow has a higher temperature and a higher volume than the staging gas flow without precombustion, i.e. the staging gas flow does not which comprise any auxiliary part of fuel gas, as known from the prior art. This increased volume of the staging gas flow typically results in a higher velocity of the staging gas flow exiting the lance which allows a longer range and/or penetration depth of the staging gas flow into the combustion zone. Therefore, the invention provides the benefit that the staging gas flow can be provided with a deeper penetration into the furnace and thus the combustion zone and/or combustion and/or the flame can be optimized regarding their spatial dimensions, wherein an optimized heating of the materials in the furnace can be achieved.

Furthermore, the invention provides the advantage that the auxiliary part of the fuel gas particularly may preheat at least a part of the staging gas flow before the staging gas flow is provided to the combustion. In other words, the precombustion of the staging gas flow also may result in a preheating of the staging gas flow, wherein in particular the second part of the oxidant provided via the lance can be preheated. This provides the advantage that the temperature and in particular temperature distribution within the furnace supplied by the heater assembly can be more accurately controlled and by this the efficiency of the combustion and/or the heating of the furnace can be improved.

Further, the invention provides the advantage that the luminosity of the combustion can be improved by means of the staging gas flow comprising the auxiliary part of the fuel gas. In particular, a flameless combustion, which is typically undesired due to its low radiative emission, can be prevented by means of the staging gas flow comprising the auxiliary part of the fuel gas and, thus, leading to a precombustion and/or preheating of the staging gas flow, which may increase the combustion temperature and by this the radiative emissions set free during the combustion.

Furthermore, the invention provides the advantage that a burner block, which preferably forms part of the burner assembly, and which preferably comprises at least one outlet area for the main gas flow and at least one outlet area for the staging gas flow may be efficiently flooded by the main gas flow in the staging gas flow. In particular, the increased volume of the staging gas flow due to the precombustion and/or preheating of the staging gas flow may also have the beneficial effect, that a quarl of the burner block is filled out by the staging gas flow and that, thus, a risk of recirculation of furnace gases into the quarl, i.e. against the flow direction of the staging gas flow, may be significantly reduced.

Preferably the main part of the oxidant provided via the burner comprises not more than 95%, preferably not more than 90%, more preferably not more than 80%, much more preferably not more than 70%, most preferably not more than 60% of the total oxidant provided to the combustion. Preferably, the complementary part of the oxidant is provided to the combustion via the lance or multiple lances by means of staging. This provides the benefit, that the temperature within the burner and/or within the furnace can be controlled and/or adjusted in a more accurate manner and therefore the combustion can reach a higher efficiency. Since the main part of the oxidant provided via the burner is limited, the combustion in or in direct vicinity of the burner can be limited to a predetermined amount and therefore the temperature within the burner or in the vicinity of the burner can be reduced and/or limited, which may be beneficial for a sustainable operation of the burner.

Preferably, the second part of the oxidant provided via the lance comprises at least 5%, preferably at least 10%, more preferably at least 20%, much more preferably at least 30%, most preferably at least 40% of the total oxidant provided to the combustion. This provides the advantage that the temperature within the burner and/or within the burner block and/or within the furnace can be controlled in a more accurate manner. Furthermore, the peak temperatures within the burner and/or within the burner block can be reduced and/or limited.

Preferably, the auxiliary part of the fuel gas provided via the lance comprises not more than 20%, preferably not more than 10%, much more preferably not more than 5%, most preferably not more than 2% of the total fuel gas provided to the combustion. This feature has the advantage that only a small ratio of the oxidant in the staging gas flow is burned or consumed, when only a very limited amount of fuel gas is injected into the staging gas flow. In other words, the amount and/or ratio of fuel gas injected into the staging gas flow is preferably limited, such that the staging gas flow and in particular the oxidant contained therein is efficiently preheated, but does not result in an unnecessary or undesired consumption of oxidant. For instance, the amount and/or ratio of the auxiliary part of the fuel gas are adjusted with respect to the total fuel gas and/or with respect to the total oxidant, such that the precombustion and/or preheating heats the staging gas flow to a temperature in a range of preferably more than 400°C.

Preferably, the burner assembly comprises several burners for providing the main gas flow to the combustion. Alternatively or additionally, the burner assembly comprises a burner block comprising multiple outlet areas for ejecting at least a part of the fuel gas and at least a part of the oxidant. When providing several burners and/or several outlet areas, the spatial distribution and/or dimensions of the combustion zone and/or the flame can be varied in a more flexible manner.

In particular, an outlet area of the burner block for the fuel gas and/or for the staging gas flow, i.e. for the lance, preferably has a substantially rectangular shape, although also other shapes, for instance an elliptical shape, may be suitable. "Substantially rectangular" means that the outlet area must not necessarily have an exact rectangular shape in geometric means, but for instance the corners may be rounded.

For example, the outlet area may have a ratio of its width to its height of at least 3:1, preferably at least 4:1, more preferably at least 5:1, much more preferably at least 6:1, most preferably at least 6.5:1. In a preferred embodiment the outlet area of the burner for the main gas flow may have a ratio of 6.9:1, and/or wherein the outlet area of the burner for the staging gas flow has a ratio of 7.1:1. Particularly, the burner may be a flat flame burner. In this respect, a large ratio of the width to the height of the outlet areas of the burner may be beneficial for achieving a flat flame having a large transversal extension for providing a large contact area with the material to be molten or heated in the furnace.

According to other preferred embodiments, the burner assembly may comprise several lances, wherein each of the several lances is adapted to provide one of several staging gas flows to the combustion. Also this feature provides the beneficial effect, that the spatial distribution of the combustion zone and/or the flame may be adjusted in a flexible manner.

Preferably, the amount and/or ratio of the auxiliary part of the fuel gas in the staging gas flow is adjustable. This allows adjusting at least partially the volume and/or the temperature of the staging gas flow by controlling the amount of precombustion and/or preheating of the staging gas flow. Consequently, by means of this feature, also the penetration depth and/or the spatial dimensions of the combustion zone and/or the flame and/or the temperature of the combustion and/or the temperature of the flame and/or the luminosity of the flame can be adjusted and adapted to the required purposes. Preferably, the burner assembly comprises control means for adjusting an amount and/or a ratio of the auxiliary part of the fuel gas in the staging gas flow. For instance, the control means can comprise a computing unit and/or a control unit, which may control or adjust the amount and/or the ratio of the auxiliary part of the fuel gas in the staging gas flow. For instance, the adjustment of the amount and/or the ratio of the auxiliary part of the fuel gas in the staging gas flow can be performed by opening and/or closing and/or adjusting a valve and/or via the injection element for injecting the auxiliary fuel gas into the staging gas flow.

Further advantages and preferred embodiments of the invention are disclosed in the following description and figures.

It is understood by a person skilled in the art that the preceding and the following features are not only disclosed in the detailed combinations, but that also other combinations or the features alone can be used without exceeding the scope of the present invention.

The invention will now be further described with reference to the accompanying drawing showing a preferred embodiment.

### Brief description of the drawing

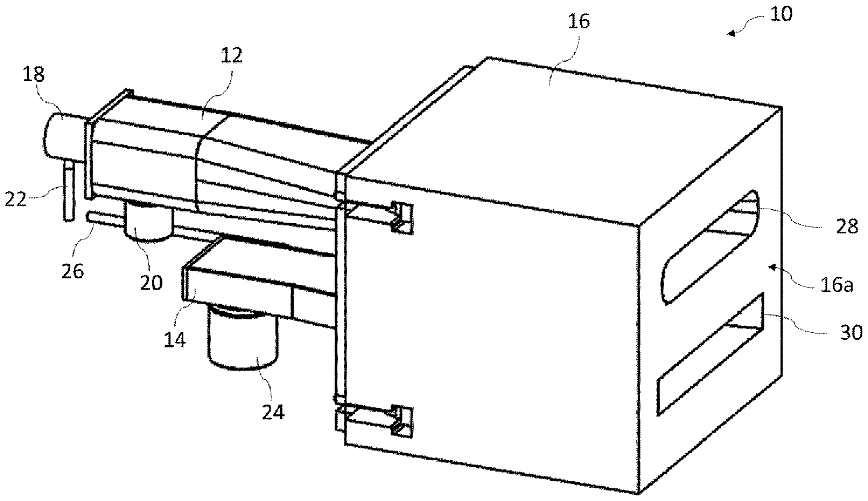

Fig. 1 depicts a burner assembly according to a preferred embodiment.

### Detailed description of the drawings

Fig. 1 shows a burner assembly 10 comprising a burner 12 for providing a fuel gas to a combustion in a furnace, a lance 14 for providing an oxidant to the combustion and a burner block 16. The burner block 16 may be made from stone, such as fireclay, and may be used for installing the burner assembly 10 into a furnace while preventing in particular the burner 12 and the lance 14 of being exposed to the high temperatures typically prevailing inside the furnace.

The burner assembly 10 comprises further a main fuel gas inlet 18 for supplying fuel gas to the burner 12 as a main part of the fuel gas in the main gas flow. In addition, an oxidant inlet 20 is provided for supplying the burner 12 with the first part of the oxidant to be ejected from the burner 12 together with the residual fuel gas. In addition, a further oxidant injector 22 is provided, which allows injecting a further part of the oxidant into the main gas flow into the burner, wherein the further part of oxidant injected via the oxidant injector 22 may be used for precombusting and/or preheating the main gas flow and in particular the fuel gas supplied to the burner 12 via the fuel gas inlet 18. Since typically the volume and/or amount of the further oxidant injected via the oxidant injector 22 is considerably smaller than the amount and/or volume of fuel gas supplied to the burner 12 via the fuel gas inlet 18, the diameter of the oxidant injector 22 is significantly smaller than the diameter of the fuel gas inlet 18.

The lance 14 is equipped with an oxidant inlet 24, for supplying the lance 14 with oxidant, and with a fuel gas injector 26 (partly covered by the oxidant inlet 20 of the burner 12) having a smaller diameter than the oxidant inlet 24. The fuel gas injector 26 allows injecting an auxiliary part of the fuel gas into the lance 14 for precombusting and/or preheating the staging gas flow and in particular the oxidant provided to the combustion via the lance 14.

Accordingly, the burner 12, as well as the lance 14, are both supplied with fuel gas and with oxidant to allow a precombustion and/or a preheating of the main gas flow in the burner 12 and of the staging gas flow in the lance 14, respectively.

The burner block 16 according to the depicted embodiment is formed of stone, in particular of fireclay, which is adapted to sustain high temperatures prevailing in the furnace to which the burner assembly is to be connected or into which the burner block is to be integrated, which may be for instance between 1,000° C and 2,000° C. Due to the burner block 16, the components, which are less sustainable to such high temperatures, such as the burner 12, the lance 14 and/or supply tubes, are protected from being exposed to the heat prevailing in the furnace. While the burner block 16 is formed from solid stone, it comprises channels for conducting the main gas flow and the staging gas flow, and which connect the burner 12 with a main gas flow outlet area 28 and the lance 14 with a staging gas outlet area 30, respectively.

The main gas flow outlet area 28 and also the staging gas flow outlet are 30 have essentially a rectangular shape, wherein for both outlet areas the width, i.e. its dimensions in horizontal direction, is significantly larger than the height. According to the depicted embodiment, the main gas flow outlet area 28 has a ratio of its width to its height of 6.9:1, which allows a broad, sheet-like distribution of the main gas flow exiting the main gas flow outlet area 28. The staging gas flow outlet area 30 has a ratio of 7.1:1, which also allows a broad, sheet-like distribution of the staging gas flow when exiting the staging gas flow outlet area 30. By this, a broad (in horizontal direction) and thin (in vertical direction) combustion zone and/or flame can be provided at the outlet side 16a of the burner block. Due to the injection of the auxiliary fuel gas into the lance, a high velocity of the staging gas flow and, hence, a deep penetration of the staging gas flow can be obtained, which consequently allows a deep penetration of the combustion zone and/or the flame into the furnace.

### Reference signs

- 10: burner assembly
- 12: burner
- 14: lance
- 16: burner block
- 16a: outlet side (of the burner block)
- 18: fuel gas inlet (of the burner)
- 20: oxidant inlet (of the burner)
- 22: oxidant injector (of the burner)
- 24: oxidant inlet (of the lance)
- 26: fuel gas injector (of the lance)
- 28: main gas flow outlet area
- 30: staging gas flow outlet area

## Claims

1. Method for combusting a fuel gas with an oxidant by using a burner assembly (10) comprising a burner (12) and a lance (14), the method comprising:
- providing via the burner (12) a main gas flow to a combustion, wherein the main gas flow comprises a main part of the fuel gas and a first part of the oxidant;
- providing via the lance (14) a staging gas flow to the combustion, wherein the staging gas flow comprises a second part of the oxidant and an auxiliary part of the fuel gas.
wherein the main part of the fuel gas is larger than the auxiliary part of the fuel gas.

2. Method according to claim 1, wherein the auxiliary part of the fuel gas preheats at least a part of the staging gas flow before the staging gas flow is provided to the combustion.

3. Method according to claim 1 or 2, wherein the first part of the oxidant provided via the burner (12) comprises not more than 95%, preferably not more than 90%, more preferably not more than 80%, much more preferably not more than 70%, most preferably not more than 60% of the total oxidant provided to the combustion.

4. Method according to any one of the preceding claims, wherein the second part of the oxidant provided via the lance (14) comprises at least 5%, preferably at least 10%, more preferably at least 20%, much more preferably at least 30%, most preferably at least 40% of the total oxidant provided to the combustion.

5. Method according to any one of the preceding claims, wherein the auxiliary part of the fuel gas provided via the lance comprises not more than 20%, preferably not more than 10%, much more preferably not more than 5%, most preferably not more than 2% of the total fuel gas provided to the combustion.

6. Method according to any one of the preceding claims, wherein the burner assembly (10) comprises several burners (12) for providing the main gas flow to the combustion, and/or wherein the burner assembly comprises a burner block (16) comprising multiple outlet areas (28, 30) for ejecting at least a part of the combusted fuel gas and at least a part of the oxidant.

7. Method according to any one of the preceding claims, wherein the burner assembly (10) comprises several lances (14), wherein each of the several lances (14) provides one of several staging gas flows to the combustion.

8. Method according to any one of the preceding claims, wherein the amount and/or ratio of the auxiliary part of the fuel gas in the staging gas flow is adjustable.

9. Burner assembly (10) for combusting a fuel gas with an oxidant, the burner assembly (10) comprising:
- a burner (12) for providing a main gas flow to a combustion, wherein the main gas flow comprises a main part of the fuel gas and a first part of the oxidant;
- a lance (14) for providing a staging gas flow to the combustion, wherein the staging gas flow comprises a second part of the oxidant and an auxiliary part of the fuel gas;
- an injection element for injecting the auxiliary part of the fuel gas to the second part of the oxidant before providing the staging gas flow to the combustion via the lance (14);
wherein the main part of the fuel gas is larger than the auxiliary part of the fuel gas.

10. Burner assembly (10) according to claim 9, further comprising a control means for adjusting an amount and/or a ratio of the auxiliary part of the fuel gas in the staging gas flow, preferably via the injection element.

11. Burner assembly (10) according to claim 9 or 10, wherein the burner assembly comprises several burners (12) for providing the main gas flow to the combustion, and/or wherein the burner assembly comprises a burner block (16) comprising multiple outlet areas (28, 30) for ejecting at least a part of the combusted fuel gas and at least a part of the oxidant.

12. Burner assembly (10) according to any one of claim 9 to 11, wherein an outlet area (28, 30) of the burner block (16) for the fuel gas and/or for the lance (14) has a substantially rectangular shape, and/or wherein the outlet area (28, 30) has a ratio of its width to its height of at least 3:1, preferably at least 4:1, more preferably at least 5:1, much more preferably at least 6:1, most preferably at least 6.5:1.

13. Burner assembly (10) according to any one of claims 9 to 12, wherein the burner assembly (10) comprises several lances (14), wherein each of the several lances (14) is adapted to provide one of several staging gas flows to the combustion.

14. Burner assembly according to any one of claims 9 to 13, wherein the burner (12) is a flat flame burner.

15. Furnace comprising a burner assembly (10) according to any one of claims 9 to 14.
